# EUROPÄISCHE PATENTSCHRIFT

(11) **EP 2 236 012 B1**
(45) Veröffentlichungstag und Bekanntmachung des Hinweises auf die Patenterteilung: **04.01.2012**
(21) Anmeldenummer: 08708105.5
(22) Anmeldetag: 23.01.2008
(51) Int. Cl.: H05B 41/288

(54) **BETRIEBSVERFAHREN UND SCHALTUNGSANORDNUNG FÜR LICHTQUELLEN**
METHOD FOR THE OPERATION OF AND CIRCUIT ARRANGEMENT FOR LIGHT SOURCES
PROCÉDÉ D'EXPLOITATION ET CIRCUIT ÉLECTRIQUE POUR SOURCES LUMINEUSES

(43) Veröffentlichungstag der Anmeldung: 06.10.2010
(73) Patentinhaber: Osram AG, 81536 München (DE)
(72) Erfinder: BRÜCKEL, Martin, 518053 Shenzhen Nanshan District (CN)
(86) Internationale Anmeldenummer: PCT/EP2008/050740
(87) Internationale Veröffentlichungsnummer: WO 2009/092439

(56) Entgegenhaltungen:
- EP-A- 1 326 483
- EP-A- 1 422 979
- WO-A-03/055278
- WO-A-2004/045256

## Beschreibung

### Technisches Gebiet

Die Erfindung geht aus von einem Betriebsverfahren für Lichtquellen gemäß dem Oberbegriff des Anspruchs 1 und von einer Schaltungsanordnung gemäß dem Oberbegriff des Anspruchs 11. Es handelt sich dabei insbesondere um ein Verfahren zur Regelung einer Schaltungsanordnung für Lichtquellen, die in regelmäßigen Abständen umgepolt werden, oder bei denen häufig große Stromänderungen notwendig werden. Besonderes Augenmerk liegt dabei auf der Grö-βe von Überschwingungen, die durch die Stromänderung ausgelöst werden.

### Stand der Technik

Allgemein verbreitet bei elektronischen Betriebsgeräten für Gasentladungslampen ist der sog. Rechteckbetrieb. Dabei wird die Lampe mit einem Gleichstrom beaufschlagt, der in regelmäßigen Abständen umgepolt wird. Das Umpolen ist nötig, um Elektrophorese-Effekte zu vermeiden und um jede Elektrode der Lampe gleich zu belasten. Ebenfalls verbreitet ist bei speziell dafür ausgelegten Gasentladungslampen der Gleichstrombetrieb. Für bestimmte Anwendungen, z.B. im Projektionsbetrieb sind jedoch auch bei Gleichstromlampen schnelle Stromänderungen notwendig. Auch bei Projektionsanwendungen mit Halbleiterlichtquellen sind sehr schnelle Stromänderungen notwendig, um eine konstante Farbtemperatur zu sichern.

Der Gleichstrom wird im Allgemeinen von einer getakteten Stromversorgung, im folgenden auch Gleichspannungswandler genannt, bereitgestellt. Dabei handelt es sich meist um bekannte Topologien wie Tiefsetzer (Buck), Hochsetzer (Boost), Inverswandler (Buck-Boost), Cük- oder Sepic-Wandler. Meist ist die Spannung, die dem Gleichspannungswandler zugeführt wird, höher als die Spannung an der Lichtquelle, weshalb bevorzugt ein Tiefsetzer eingesetzt wird. Die Leistung, die der Gleichspannungswandler einer Last bereitstellt kann im Allgemeinen durch das Tastverhältnis oder die Schaltfrequenz von elektronischen Schaltern, die in dem Gleichspannungswandler enthalten sind, eingestellt werden. Dazu besitzt der Gleichspannungswandler einen Stelleingang an dem ein Sollwert eingespeist wird. Falls es sich bei dem Gleichspannungswandler z.B. um einen Tiefsetzer handelt, so wird meist ein Pulsweitenmodulator (PWM) verwendet, der den Sollwert in ein Ansteuersignal für den im Tiefsetzer enthaltenen elektronischen Schalter umsetzt.

Treten nun schnelle Stromänderungen im Sollwert auf, z.B. durch das Umpolen des Lampenstroms oder durch Farbänderungen in Projektorsystemen, so kann der Gleichspannungswandler diesen schnellen Stromänderungen nicht folgen. Die Änderung des Stromes verläuft langsamer und es tritt ein Überschwingverhalten auf, d.h. dass der Istwert des Stromes über den Sollwert hinausgeht und sich erst nach einiger Zeit wieder dem Sollwert nähert. Dadurch nimmt die Lichtquelle mehr Leistung auf, was sich in einer erhöhten, oft unerwünschten Lichtabgabe niederschlägt. Bei Projektionssystemen kann durch diesen Effekt z.B. die Farbdarstellung verfälscht werden. Durch den kurzzeitig erhöhten Strom erhöhen sich auch unerwünschte Geräusche, die die Schaltung aufgrund von Magnetostriktionen und anderen Mechanismen an ihre Umwelt abgibt.

In der EP 1 326 483 A1 wird daher versucht, das Überschwingverhalten aufgrund der Umpolung des Lampenstroms zu vermeiden, indem kurz vor dem Umpolen der Sollwert des Stromes erniedrigt wird und kurz nach der Umpolung wieder der gewünschte Sollwert eingestellt wird. Es wird also die Sollgröße synchron zur Umpolung und damit synchron zum Umschaltsignal um einen Absenkwert mit zeitlichem Verlauf abgesenkt. Dies reduziert zwar das Überschwingverhalten beim Umpolen des Lampenstroms, also beim Kommutieren der Lampe, kann aber nicht immer einen Beitrag zu schnellen Stromänderungen des Lampenstroms leisten, die eine schnelle Änderung der Lampenleistung nach sich ziehen.

### Aufgabe

Es ist Aufgabe der vorliegenden Erfindung, ein Verfahren zum Betrieb von Lichtquellen gemäß dem Oberbegriff des Anspruchs 1 bzw. ein Betriebsgerät zum Betrieb von Lichtquellen gemäß dem Oberbegriff des Anspruchs 8 bereitzustellen, das eine schnelle Änderung des Lichtquellenstroms mit im Vergleich zum Stand der Technik reduziertem Überschwingen bewerkstelligt.

### Darstellung der Erfindung

Die Lösung der Aufgabe bezüglich des Verfahrens erfolgt erfindungsgemäß mit einem Verfahren zur Regelung einer Lichtquelle, die von einem Gleichspannungswandler mit einer Leistung versorgt wird wobei durch Vorgabe eines Sollwerts für einen Betriebsparameter des Gleichspannungswandlers (11) ein Stellwert geregelt wird, gekennzeichnet durch folgende Verfahrensschritte:
- vor schnellen Änderungen des Sollwerts Erhöhen der Schaltfrequenz des Gleichspannungswandlers (11) um einen Erhöhungswert,
- Abwarten einer Verweilzeit (t_{RZ}),
- Einstellen des neuen Sollwerts,
- warten auf das Ende einer Gesamtverweilzeit (t₂),
- Erniedrigen der Schaltfrequenz des Gleichspannungswandlers um den Erhöhungswert.

Die Lösung der Aufgabe bezüglich der Schaltungsanordnung erfolgt mit einer Schaltungsanordnung zum Betreiben von Lichtquellen, die einen Gleichspannungswandler und eine Steuerschaltung aufweist, wobei sie mit dem oben genannten Verfahren betrieben wird.

Bevorzugt wird das Einstellen des neuen Sollwerts während der Verweilzeit (t_{RZ}) vorgenommen. Alternativ kann das Einstellen des neuen Sollwerts auch während der Gesamtverweilzeit (t₂) vorgenommen werden.

Bevorzugt wird die Lichtquelle dabei mit einem rechteckförmigen Strom betrieben. Die schnellen Änderungen des Sollwerts können dabei das Umpolen des Lampenstroms sein.

Weitere vorteilhafte Weiterbildungen und Ausgestaltungen des erfindungsgemäßen Verfahrens zur Regelung einer Gasentladungslampe ergeben sich aus weiteren abhängigen Ansprüchen und aus der folgenden Beschreibung.

### Kurze Beschreibung der Zeichnung(en)

Die Erfindung wird nachstehend anhand von Ausführungsbeispielen näher erläutert. Es zeigen:

Fig. 1 Ein schematisches Blockschaltbild eines Betriebsgerätes, mit dem das erfindungsgemäße Verfahren ausgeführt werden kann.

Fig. 2 Eine schematische Schnittdarstellung eines Videoprojektionssystems.

Fig. 3 Ein Diagramm der Beleuchtungsstärke über den Zeitbereich eines kompletten Farbraddurchlaufes.

Fig. 4 Ein Diagramm des Lichtquellenstroms mit Zeitbereichen für die normale und erhöhte Wandlerfrequenz nach dem erfindungsgemäßen Verfahren.

### Bevorzugte Ausführung der Erfindung

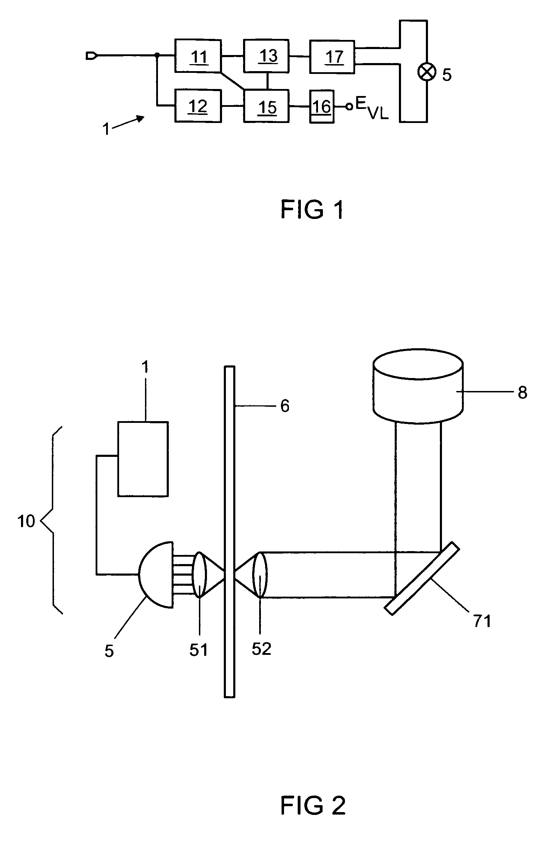

Fig. 1 zeigt ein schematisches Blockschaltbild eines Betriebsgerätes 1, mit dem das erfindungsgemäße Verfahren ausgeführt werden kann. Das Betriebsgerät 1 besitzt einen 380V Gleichspannungseingang. Diese Spannung entsteht, wenn z.B. eine 230 V Netzspannung, wie sie in Europa und anderen Teilen der Welt üblich ist, gleichgerichtet wird und mit einem Speicherkondensator gestützt wird. Die Spannung wird in einen ersten Gleichspannungswandler 11 eingegeben, der aus der Eingangsspannung eine für eine Gasentladungslampe 5 geeignete Lampenspannung generiert. Diese Lampenspannung wird in einem Wechselrichter 13 weiterverarbeitet, die aus der Gleichspannung eine Rechteckspannung mit einer Frequenz von wenigen 100Hz formt. Diese Rechteckspannung wird über ein Überlagerungszündgerät 17 an die Gasentladungslampe 5 angelegt.

Das Betriebsgerät 1 beinhaltet einen zweiten Gleichspannungswandler 12, der ausgelegt ist, die Steuerschaltung 15 mit Energie zu versorgen. Die Steuerschaltung 15 steuert den ersten Gleichspannungswandler 11 und den Wechselrichter 13 in einer Weise, dass das erfindungsgemäße Verfahren ausgeführt wird. In der bevorzugten Ausführungsform ist das Betriebsgerät 1 als Betriebsgerät für ein Videoprojektionssystem ausgelegt. Um mit der Videoelektronik zu kommunizieren weist die Steuerschaltung 15 einen Eingang E_{VL} auf, der über eine galvanische Trennung 16 geführt ist. Über diesen Eingang empfängt die Steuerschaltung 15 ein Sync-Signal, über das die Synchronisation mit der Videoelektronik erfolgt.

Um die genaue Wirkungsweise des erfindungsgemäßen Verfahrens darstellen zu können, wird im folgenden kurz auf die Funktionsweise eines Videoprojektionssystems eingegangen, wie es schematisch in Fig. 2 dargestellt ist. Das Videoprojektionssystem gemäß Fig. 2 umfasst ein Betriebsgerät 1 gemäß dem Ausführungsbeispiel der Fig. 1. Dieses Betriebsgerät 1 betreibt die Gasentladungslampe 5, die weißes Licht aussendet, das mittels einer Optik 51, beispielsweise einer Linse, auf farbige Filter eines Filterrads 6 gebündelt wird. Dem Filterrad 6 ist in Abstrahlrichtung der Gasentladungslampe 6 eine weitere Optik 52, beispielsweise ebenfalls eine Linse, nachgeordnet, die das von dem Filterrad 6 selektierte Licht auf einen DMD-Chip 71 lenkt.

Der DMD-Chip 71 umfasst mikroskopisch kleine schwenkbare Spiegel, die das farbige Licht entweder auf eine Projektionsoptik 8 lenken oder von dieser weg, je nachdem ob das zugehörige Pixel ausgeschaltet sein soll oder nicht. Der DMD-Chip 71 umfasst mit anderen Worten die Lichtventile zur Steuerung der einzelnen Pixel des Videoprojektionssystems. Das Filterrad 6 fungiert vorliegend als Farbmodulator, der sequentiell nacheinander einzelne Farben aus dem weißen Licht der Beleuchtungseinrichtung 10, die aus dem Betriebsgerät 1 und der Gasentladungslampe 5 besteht, selektiert. Bei dem vorliegenden Ausführungsbeispiel enthält das Filterrad 6 einen roten Filter, einen grünen Filter und einen blauen Filter.

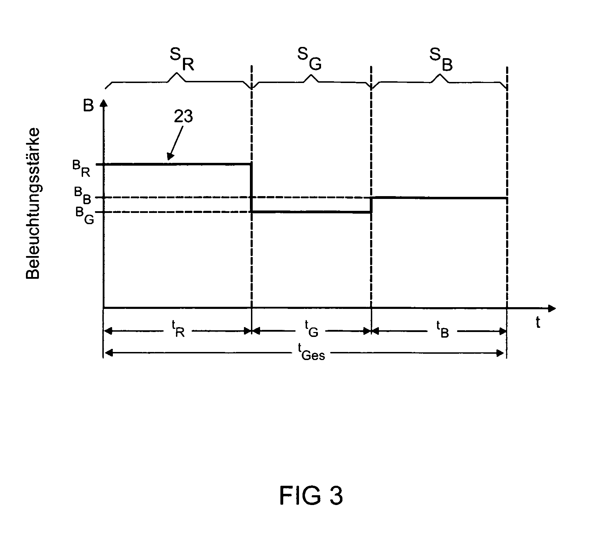

Eine in dem Betriebsgerät 1 der Beleuchtungseinrichtung gespeicherte Lichtkurve 23, die in Fig. 3 dargestellt ist, umfasst vorliegend drei Segmente S_{R}, S_{G}, S_{B}, die den einzelnen Farben der Filter des Filterrades 6, Rot, Grün und Blau zugeordnet sind. Das erste Segment S_{R} hat ein Zeitintervall t_{R}, während dem die Lichtkurve 23 eine konstante Beleuchtungsstärke B_{R} aufweist. Das erste Segment S_{R} ist der Farbe Rot zugeordnet, das heißt, dass während des Zeitintervalls t_{R} der rote Filter des Filterrades 6 rotes Licht aus dem weißen Licht der Beleuchtungseinrichtung 10 selektiert. Nach dem Zeitintervall t_{R} wechselt die Beleuchtungsstärke der Lichtkurve auf die Beleuchtungsstärke B_{G}, die während eines Zeitintervalls t_{G} des zweiten Segmentes S_{G} konstant gehalten wird, das der Farbe Grün zugeordnet ist. Daher selektiert während des Zeitintervalls t_{G} der grüne Filter des Filterrads 6 grünes Licht aus dem weißen Licht der Beleuchtungseinrichtung 10. Nach Ablauf des Zeitintervalls t_{G} wechselt das Filterrad 6 auf den blauen Filter und die Lichtkurve 23 in das dritte Segment S_{B}. Das bedeutet, dass die Beleuchtungsstärke der Lichtkurve 23 auf den Wert B_{E} wechselt, der während eines Zeitintervalls t_{B} konstant gehalten wird. Aufgrund der unterschiedlichen Werte der Beleuchtungsstärke innerhalb der verschiedenen Segmente S_{R}, S_{G}, S_{B} der Lichtkurve 23, die den einzelnen Farben Rot, Grün und Blau der Filter des Filterrades 6 zugeordnet sind, wird die Beleuchtungsstärke der Beleuchtungseinrichtung 10 so angepasst, dass die Helligkeiten der einzelnen Farben Rot, Grün und Blau einem gewünschten Wert entsprechen, die zu einer vorgegebenen Farbtemperatur des Displaysystems führen. Die drei Segmente S_{R}, S_{G}, S_{B} der Lichtkurve 23 bilden eine Periode der Lichtkurve 23, die eine Dauer zwischen 16 ms und 20 ms aufweist, wobei die Grenzen eingeschlossen sind.

Eine Umpolung des Lampenstromes findet vorzugsweise dann statt, wenn das Filterrad 6 die Farben wechselt. Zu diesem Zeitpunkt wird das Lichtsignal von dem DMD-Chip 71 dunkel getastet, um unerwünschte Farbverwischungen zu vermeiden. Um die Umpolung des Lampenstromes zu synchronisieren, sendet die Videoelektronik ein Sync-Signal an die Steuerschaltung 15, das diese dann in einer entsprechenden Ansteuerung des Wechselrichters 13 umsetzt.

Eine weitere Quelle für schnelle Lampenstromänderungen ist der sogenannte Instandhaltungsimpuls. dieser ist z.B. aus der EP 766906 B1 bekannt. Der Impuls wird dem normalen Rechteck, bevorzugt kurz vor und/oder kurz nach der Kommutierung, also der Lampenstromumpolung, überlagert. Der Impuls dient der Formung und Instandhaltung der Elektrodenspitzen der Gasentladungslampe. Der Instandhaltungsimpuls ist aber auch bekannt bei Gasentladungslampen, die im Gleichstrombetrieb betrieben werden. Durch diesen Impuls treten innerhalb einer Rechteckhalbwelle große Lampenstromänderungen auf, die mit dem erfindungsgemäßen Verfahren besonders gut ausgeregelt werden können.

Dadurch, dass die Informationen für den Instandhaltungsimpuls sowie die Informationen für die Einstellung des Farbortes anhand der Lichtkurve im Betriebsgerät abgespeichert sind, kann das erfindungsgemäße Betriebsverfahren einfach und effizient angewandt werden. Die Steuerschaltung 15 gibt dem Wechselrichter 13 die Schaltfrequenz und die Lampenleistung oder den Lampenstrom als Sollwert vor. Da die Steuerschaltung 15 weiss, wann die nächste Kommutierung oder der nächste Instandhaltungsimpuls ansteht, kann sie kurz vor diesem Zeitpunkt den Sollwert für die Wandlerfrequenz anheben. Dies hat zur Folge, dass der Gleichspannungswandler 11 wesentlich schneller auf die nun kommenden Stromänderungen reagieren kann, und die gewünschte Kurvenform besser nachgebildet wird.

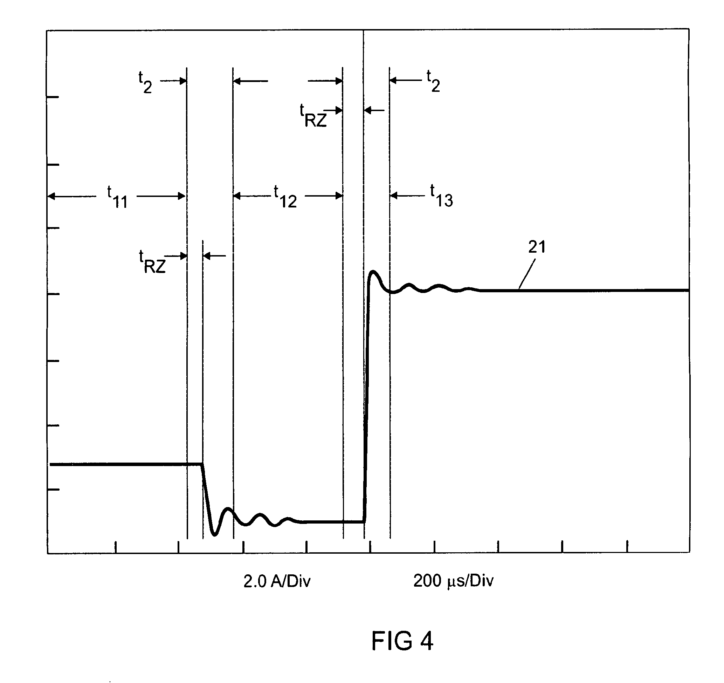

In Fig. 4 ist beispielhaft eine Halbwelle des Lampenstroms 21 dargestellt. Während der Zeitspannen t₁₁, t₁₂ und t₁₃, in denen sich der Lampenstrom nicht deutlich ändert wird der Gleichspannungswandler 11 mit einer ersten Frequenz betrieben. Dieser Normalwert der Frequenz ist so gewählt, dass die Verluste des Wandlers minimiert sind. Bevorzugt wird der Wandler also im lückenden Betrieb oder mit der Grenzfrequenz zwischen lückenden und nichtlückenden Betrieb gefahren.

Unter lückenden Betrieb wird hier die Betriebsweise eines getakteten Schaltreglers bezeichnet, bei der der Strom durch den Schalter vor dessen Einschalten zu Null wird. Unter nichtlückenden Betrieb wird die Betriebsweise eines getakteten Schaltreglers bezeichnet, bei der der Strom durch den Schalter vor dessen Einschalten nicht zu Null geworden ist. Beim nichtlückenden Betrieb entstehen somit Schaltverluste. Der günstigste Betrieb für einen getakteten Schaltregler stellt der Betrieb an der Grenze zwischen lückenden und nichtlückenden Betrieb dar. An diesem Betriebspunkt sind die Verluste gegenüber der übertragenden Leistung minimal.

Während der Zeitspannen t₂ wird die Frequenz des Gleichspannungswandlers 11 um einen Erhöhungswert erhöht, um die großen Stromänderungen besser ausregeln zu können. Da der Gleichspannungswandler aufgrund seiner die Impedanz bildenden Bauteile, wie Induktivitäten und Kondensatoren, eine gewisse Trägheit aufweist, erfolgt die Sollwertänderung der Frequenz eine Zeitspanne t_{RZ} vor der Sollwertänderung des Lampenstromes. Nach der Sollwertänderung des Lampenstromes wird eine gewisse Latenzzeit t₂-t_{RZ} eingerechnet, während der sich der Lampenstrom sicher geändert hat. Dann wird die Frequenz wieder um den Erhöhungswert auf die erste Frequenz erniedrigt. Während der Zeitspannen t₂, in denen der Gleichspannungswandler mit erhöhter Frequenz betrieben wird, kann es vorkommen, dass die Betriebsweise in den nichtlückenden Betrieb fällt. Da die Zeitspannen t₁₁, t₁₂ und t₁₃ gegenüber den Zeitspannen t₂ sehr lang sind und insgesamt gesehen den größten zeitlichen Anteil des Lampenstroms ausmachen, werden die Verluste aber insgesamt niedrig gehalten. Die erhöhten Verluste während der Zeitspannen t₂ werden bewusst in Kauf genommen, da diese Zeitspannen sehr kurz sind und den Gesamtwirkungsgrad des Systems nur geringfügig verschlechtern. Ist der Gleichspannungswandler aber auf die erste Frequenz ausgelegt, ist er kostengünstiger Herzustellen, als wenn er auf die höhere zweite Frequenz ausgelegt wäre.

Bei Anwendungen mit Halbleiterlichtquellen, wie z.B. Leuchtdioden ist das erfindungsgemäße Verfahren ebenfalls von Vorteil. Gerade bei Projektionsanwendungen mit Leuchtdioden werden die verschiedenen Leuchtdiodenstränge, die die verschiedenen Farben z.B. Rot, Grün und Blau erzeugen, für jeden Bildpunkt neu angesteuert. Bei verschiedenen Farben und Helligkeiten zweier benachbarter Bildpunkte sind die Stromänderungen durch die Leuchtdioden mitunter sehr groß. Durch das erfindungsgemäße Verfahren werden die großen Stromänderungen der Leuchtdioden deutlich besser bewältigt, als es bisher möglich war.

Mit der erfindungsgemäße Maßnahme wird die Regelcharakteristik des Betriebsgerätes bezüglich schneller Lichtquellenstromänderungen signifikant verbessert und die Eingangs genannten Probleme vermindert. Dadurch, dass der Gleichspannungswandler auf die erste Frequenz ausgelegt ist, erhöhen sich die Kosten des Betriebsgerätes, das mit dem erfindungsgemäßen Verfahren betrieben wird, gegenüber dem bekannten Stand der Technik nicht.

## Patentansprüche

1. Verfahren zur Regelung des Betriebes einer Lichtquelle (5), die von einem Gleichspannungswandler (11) mit einer Leistung versorgt wird, wobei durch Vorgabe eines Sollwerts für einen Betriebsparameter des Gleichspannungswandlers (11) ein Stellwert geregelt wird, **gekennzeichnet durch** folgende Verfahrensschritte:
• vor schnellen Änderungen des Sollwerts Erhöhen der Schaltfrequenz des Gleichspannungswandlers (11) um einen Erhöhungswert,
• Abwarten einer Verweilzeit (t_{RZ}),
• Einstellen des neuen Sollwerts,
• warten auf das Ende einer Gesamtverweilzeit (t₂),
• Erniedrigen der Schaltfrequenz des Gleichspannungswandlers (11) um den Erhöhungswert.

2. Verfahren gemäß Anspruch 1, **dadurch gekennzeichnet, dass** das Einstellen des neuen Sollwerts während der Verweilzeit (t_{RZ}) vorgenommen wird.

3. Verfahren gemäß Anspruch 1, **dadurch gekennzeichnet, dass** das Einstellen des neuen Sollwerts während der Gesamtverweilzeit (t₂) vorgenommen wird

4. Verfahren gemäß Anspruch 1, **dadurch gekennzeichnet, dass** die Lichtquelle (5) mit einem rechteckförmigen Strom betrieben wird.

5. Verfahren gemäß einem der Ansprüche 1-3, **dadurch gekennzeichnet, dass** die schnellen Änderungen des Sollwerts das Umpolen des Lichtquellenstroms sind.

6. Verfahren gemäß einem der Ansprüche 1-3, **dadurch gekennzeichnet, dass** die Lichtquelle (5) mit einem Gleichstrom betrieben wird.

7. Verfahren gemäß einem der Ansprüche 1-5, **dadurch gekennzeichnet, dass** die schnellen Änderungen des Sollwerts der Beginn oder das Ende eines Instandhaltungsimpulses für eine Gasentladungslampe sind.

8. Verfahren gemäß einem der Ansprüche 1-6, **dadurch gekennzeichnet, dass** die schnellen Änderungen des Sollwerts der Beginn oder das Ende eines Farbradabschnittes sind, durch den der Lichtquellenstrom synchronisiert wird.

9. Verfahren gemäß einem der vorhergehenden Ansprüche, **dadurch gekennzeichnet, dass** sich der Gleichspannungswandler (11) während er mit der ersten Frequenz betrieben wird, im lückenden Betrieb oder an der Grenze zwischen lückenden und nichtlückenden Betrieb befindet.

10. Verfahren gemäß einem der vorhergehenden Ansprüche, **dadurch gekennzeichnet, dass** der Gleichspannungswandler (11) in den nichtlückenden Betrieb übergeht, wenn er mit der erhöhten Frequenz betrieben wird.

11. Schaltungsanordnung zur Regelung des Betriebes einer Lichtquelle (5), aufweisend:
- einen Gleichspannungswandler (11),
- einen Wechselrichter (13), und
- eine Steuerschaltung (15), die den Gleichspannungswandler und den Wechselrichter steuert,
- wobei die Steuerschaltung (15) durch Vorgabe eines Sollwerts für einen Betriebsparameter des Gleichspannungswandlers (11) einen Stellwert regelt,
- der Stellwert die Schaltfrequenz des Gleichspannungswandlers (11) ist, und
- die Steuerschaltung derart gestaltet ist vor schnellen Änderungen des Sollwerts folgende Schritte auszuführen:
- Erhöhen der Schaltfrequenz des Gleichspannungswandlers (11) um einen Erhöhungswert,
- Abwarten einer Verweilzeit (t_{RZ}).
- Einstellen eines neuen Sollwertes,
- Warten auf das Ende einer Gesamtverweilzeit (t₂),
- Erniedrigen der Schaltfrequenz des Gleichspannungswandlers (11) um den Erhöhungswert.

12. Schaltungsanordnung gemäß Anspruch 11, **dadurch gekennzeichnet, dass** die Lichtquelle (5) eine Gasentladungslampe ist.

13. Schaltungsanordnung gemäß Anspruch 11, **dadurch gekennzeichnet, dass** die Lichtquelle (5) eine Halbleiterlichtquelle ist.

## Claims

1. Method for the closed-loop control of the operation of a light source (5) which is supplied with power by a DC/DC voltage converter (11), a manipulated variable being regulated by a setpoint value for an operational parameter of the DC/DC voltage converter (11) being input,
**characterized by** the following method steps:
• increasing the switching frequency of the DC/DC voltage converter (11) by an increase value prior to rapid changes in the setpoint value,
• waiting for a retention time (t_{RZ}),
• setting the new setpoint value,
• waiting for the end of a total retention time (t₂),
• lowering the switching frequency of the DC/DC voltage converter (11) by the increase value.

2. Method according to Claim 1, **characterized in that** the setting of the new setpoint value is performed during the retention time (t_{RZ}).

3. Method according to Claim 1, **characterized in that** the setting of the new setpoint value is performed during the total retention time (t₂).

4. Method according to Claim 1, **characterized in that** the light source (5) is operated on a square-wave current.

5. Method according to one of Claims 1-3, **characterized in that** the rapid changes in the setpoint value are the polarity reversal of the light source current.

6. Method according to one of Claims 1-3, **characterized in that** the light source (5) is operated on a direct current.

7. Method according to one of Claims 1-5, **characterized in that** the rapid changes in the setpoint value are the beginning or the end of a maintenance pulse for a gas discharge lamp.

8. Method according to one of Claims 1-6, **characterized in that** the rapid changes in the setpoint value are the beginning or the end of a color wheel section, by means of which the light source current is synchronized.

9. Method according to one of the preceding claims, **characterized in that**, while it is operated at the first frequency, the DC/DC voltage converter (11) is in the intermittent operating mode or at the boundary between the intermittent and the non-intermittent operating modes.

10. Method according to one of the preceding claims, **characterized in that** the DC/DC voltage converter (11) transfers to the non-intermittent operating mode when it is operated at the increased frequency.

11. Circuit arrangement for the closed-loop control of the operation of a light source (5), having:
- a DC/DC voltage converter (11),
- an inverter (13), and
- a control circuit (15), which controls the DC/DC voltage converter and the inverter,
- the control circuit (15) regulating a manipulated variable by a setpoint value for an operational parameter of the DC/DC voltage converter (11) being input,
- the manipulated variable being the switching frequency of the DC/DC voltage converter (11), and
- the control circuit being designed to implement the following steps prior to rapid changes in the setpoint value:
- increasing the switching frequency of the DC/DC voltage converter (11) by an increase value,
- waiting for a retention time (t_{RZ}),
- setting a new setpoint value,
- waiting for the end of a total retention time (t₂)
- lowering the switching frequency of the DC/DC voltage converter (11) by the increase value.

12. Circuit arrangement according to Claim 11, **characterized in that** the light source (5) is a gas discharge lamp.

13. Circuit arrangement according to Claim 11, **characterized in that** the light source (5) is a semiconductor light source.

## Revendications

1. Procédé pour le réglage de l'exploitation d'une source lumineuse (5), qui est alimentée par un convertisseur continu-continu (11) avec une puissance, une valeur prescrite étant réglée par la spécification d'une valeur de consigne pour un paramètre de service du convertisseur continu-continu (11), **caractérisé par** des étapes de procédé suivantes :
• avant des variations rapides de la valeur de consigne, augmentation de la fréquence de commutation du convertisseur continu-continu (11) d'une valeur d'élévation,
• attente d'un temps de séjour (t_{RZ}),
• réglage de la nouvelle valeur de consigne,
• attente de la fin d'un temps de séjour global (t₂)
• abaissement de la fréquence de commutation du convertisseur continu-continu (11) de la valeur d'élévation.

2. Procédé selon la revendication 1, **caractérisé en ce que** le réglage de la nouvelle valeur de consigne est effectué pendant le temps de séjour (t_{RZ}).

3. Procédé selon la revendication 1, **caractérisé en ce que** le réglage de la nouvelle valeur de consigne est effectué pendant le temps de séjour global (t₂).

4. Procédé selon la revendication 1, **caractérisé en ce que** la source lumineuse (5) est exploitée avec un courant de forme rectangulaire.

5. Procédé selon l'une des revendications 1 à 3, **caractérisé en ce que** les variations rapides de la valeur de consigne sont l'inversion de polarité du courant de source lumineuse.

6. Procédé selon l'une des revendications 1 à 3, **caractérisé en ce que** la source lumineuse (5) est exploitée avec un courant continu.

7. Procédé selon l'une des revendications 1 à 5, **caractérisé en ce que** les variations rapides de la valeur de consigne sont le début ou la fin d'une impulsion d'entretien pour une lampe à décharge de gaz.

8. Procédé selon l'une des revendications 1 à 6, **caractérisé en ce que** les variations rapides de la valeur de consigne sont le début ou la fin d'une partie de roue de couleur par laquelle le courant de source lumineuse est synchronisé.

9. Procédé selon l'une des revendications précédentes, **caractérisé en ce que** le convertisseur continu-continu (11) se trouve, lorsqu'il est exploité avec la première fréquence, dans le mode continu ou à la limite entre le mode continu et le mode non continu.

10. Procédé selon l'une des revendications précédentes, **caractérisé en ce que** le convertisseur continu-continu (11) passe dans le mode non continu lorsqu'il est exploité avec la fréquence élevée.

11. Agencement de circuit pour le réglage de l'exploitation d'une source lumineuse (5), présentant :
- un convertisseur continu-continu (11),
- un onduleur (13), et
- un circuit de commande (15), qui commande le convertisseur continu-continu et l'onduleur,
- le circuit de commande (15) réglant une valeur prescrite par spécification d'une valeur de consigne pour un paramètre de service du convertisseur continu-continu (11),
- la valeur prescrite est la fréquence de commutation du convertisseur continu-continu (11), et
- le circuit de commande est conçu de façon à effectuer les étapes suivantes avant des variations rapides de la valeur de consigne :
- augmentation de la fréquence de commutation du convertisseur continu-continu (11) d'une valeur d'augmentation,
- attente d'un temps de séjour (t_{RZ}),
- réglage d'une nouvelle valeur de consigne,
- attente de la fin d'un temps de séjour global (t₂),
- abaissement de la fréquence de commutation du convertisseur continu-continu (11) de la valeur d'augmentation.

12. Agencement de circuit selon la revendication 11, **caractérisé en ce que** la source lumineuse (5) est une lampe à décharge de gaz.

13. Agencement de circuit selon la revendication 11, **caractérisé en ce que** la source lumineuse (5) est une source lumineuse à semi-conducteurs.
